# EUROPÄISCHE PATENTSCHRIFT

(11) **EP 3 976 429 B1**
(45) Veröffentlichungstag und Bekanntmachung des Hinweises auf die Patenterteilung: **16.04.2025**
(21) Anmeldenummer: 20727185.9
(22) Anmeldetag: 14.05.2020
(51) Int. Cl.: B60T 13/68, B60T 8/32, B60T 8/172, B60T 8/34, B60T 7/12, B60T 8/17, B60T 8/176

(54) **ELEKTRONISCH GESTEUERTES PNEUMATISCHES BREMSSYSTEM MIT ZWEI EINKANAL-ACHSMODULATOREN UND ABS-VENTILEN SOWIE FAHRZEUG MIT EINEM SOLCHEN BREMSSYSTEM**
ELECTRONICALLY CONTROLLED PNEUMATIC BRAKE SYSTEM WITH TWO SINGLE-CHANNEL AXLE MODULATORS AND ABS VALVES, AND VEHICLE HAVING A BRAKE SYSTEM OF SAID TYPE
SYSTÈME DE FREINAGE PNEUMATIQUE À COMMANDE ÉLECTRONIQUE COMPRENANT DEUX MODULATEURS D'ESSIEU À CANAL UNIQUE ET DES SOUPAPES ANTIBLOCAGE (ABS), ET VÉHICULE ÉQUIPÉ D'UN SYSTÈME DE FREINAGE DE CE TYPE

(30) Priorität: 28.05.2019 DE 102019114270
(43) Veröffentlichungstag der Anmeldung: 06.04.2022
(73) Patentinhaber: ZF CV Systems Europe BV, 1170 Brussels (BE)
(72) Erfinder: MICHAELSEN, Arne, 30926 Seelze (DE)
(74) Vertreter: Rabe, Dirk-Heinrich
(86) Internationale Anmeldenummer: PCT/EP2020/063401
(87) Internationale Veröffentlichungsnummer: WO 2020/239449

(56) Entgegenhaltungen:
- DE-A1- 102007 021 646
- DE-A1- 102008 014 459
- DE-A1- 102014 006 613

## Beschreibung

Die vorliegende Erfindung betrifft ein elektrisch gesteuertes pneumatisches Bremssystem für ein Fahrzeug, insbesondere Nutzfahrzeug, aufweisend einen Vorderachsbremskreis mit einem einkanaligen Vorderachsmodulator zum Ansteuern von ersten und zweiten Vorderachs-Betriebsbremsaktuatoren, wobei zwischen dem Vorderachsmodulator und dem ersten Vorderachs-Betriebsbremsaktuator ein erstes Vorderachs-ABS-Ventil und zwischen dem Vorderachsmodulator und dem zweiten Vorderachs-Betriebsbremsaktuator ein zweites Vorderachs-ABS-Ventil geschaltet ist sowie einen Hinterachsbremskreis mit wenigstens einem einkanaligen Hinterachsmodulator zum Ansteuern von ersten und zweiten Hinterachs-Betriebsbremsaktuatoren, wobei zwischen dem wenigstens einen Hinterachsmodulator und dem ersten Hinterachs-Betriebsbremsaktuator ein erstes Hinterachs-ABS-Ventil und zwischen dem Hinterachsmodulator und dem zweiten Hinterachs-Betriebsbremsaktuator ein zweites Hinterachs-ABS-Ventil geschaltet ist. Ferner umfasst das Bremssystem einen Bremswertgeber, der wenigstens einen elektrischen Anschluss aufweist, zum Bereitstellen eines elektronischen Bremsanforderungssignals und eine zentrale elektronische Steuereinheit, die wenigstens mit dem Bremswertgeber zum Empfang des elektronischen Bremsanforderungssignals verbunden ist und zur Steuerung der Vorderachs- und Hinterachsmodulatoren mit diesen verbunden ist. Ferner betrifft die Erfindung ein Fahrzeug, insbesondere Nutzfahrzeug mit einem derartigen Bremssystem.

Derartige, elektronisch gesteuerte pneumatische Bremssysteme sind beispielsweise aus DE 10 2010 050 578 A1, DE 10 2015 011 296 A1 und DE 10 2016 005 318 A1 der hiesigen Anmelderin bekannt.

Insbesondere DE 10 2016 005 318 A1 offenbart ein elektronisch steuerbares pneumatisches Bremssystem mit mindestens zwei Bremskreisen, wobei mindestens einem der mindestens zwei Bremskreise ein elektrisch und pneumatisch steuerbares Steuerventil und einem weiteren der mindestens zwei Bremskreise ein elektrisch steuerbares Parkbremsventil zugeordnet ist, zum Vorgeben von Bremsdrücken zur Ansteuerung von Radbremsen der jeweiligen Bremskreise. Eine erste Steuereinheit ist vorgesehen, die so ausgebildet ist, dass das jeweilige Steuerventil in Abhängigkeit von einer automatisiert angeforderten Fahrzeug-Soll-Verzögerung oder einer vom Fahrer vorgegebenen Betätigung über eine Betätigungsvorrichtung elektronisch angesteuert wird. Eine zweite Steuereinheit ist vorgesehen, die dazu ausgebildet ist, das Parkbremsventil in Abhängigkeit von der automatisiert angeforderten Fahrzeugsollverzögerung elektrisch zu steuern, wenn eine elektrische Ansteuerung des jeweiligen Steuerventils verhindert ist, zum Ausbilden einer elektronisch-pneumatisch gesteuerten Redundanz. Ferner zeichnet sich das Bremssystem dadurch aus, dass mindestens ein einem Steuerventil zugeordnetes Bypass-Ventil vorgesehen ist, das ausgebildet ist, das zugeordnete Steuerventil pneumatisch anzusteuern, wobei die pneumatische Ansteuerung in Abhängigkeit von der automatisiert angeforderten Fahrzeugsollverzögerung oder in Abhängigkeit von der vom Fahrer vorgegebenen Betätigung der Betätigungseinrichtung erfolgt, wenn eine elektrische Ansteuerung des jeweiligen Steuerventils verhindert ist zum Erweitern der elektronisch-pneumatisch gesteuerten Redundanz. In diesem Rahmen sind in dem Bremssystem in einer Ausführungsform ein einkanaliger Vorderachsmodulator, ein einkanaliger Hinterachsmodulator sowie ein Zentralmodul vorgesehen. Sowohl die Vorderachse als auch die Hinterachse sind mit ABS-Ventilen versehen, die auf Betriebsbremsaktuatoren an den jeweiligen Achsen einwirken.

Aus EP 1 541 437 B1 ist ferner ein elektronisches Bremssystem für ein Fahrzeug mit mindestens zwei Bremskreisen bekannt, bei welchem jeweils einem Bremskreis eine Bremskreissteuerung zugeordnet ist und welches über ein Zentralsteuergerät für alle Bremskreise verfügt. Ferner ist ein Bremspedal vorgesehen, das zwei autonome Bremsanforderungsaufnahmemittel aufweist, wobei bei Ausfall des Zentralsteuergeräts oder bei erkanntem Fehler des Zentralsteuergeräts eine erste Bremskreissteuerung der Bremskreissteuerungen autark vom Zentralsteuergerät die Ansteuerung eines Bremskreises wahrnehmen kann. Jedes der Bremsanforderungsaufnahmemittel ist als doppelter Wegwinkel oder Kraftsensor oder als einzelner Wegwinkel oder Kraftsensor ausgebildet und die autarke erste Bremskraftsteuerung ist unabhängig vom Zentralsteuergerät mit elektrischer Energie versorgt.

Aus DE 10 2014 006613 A1 ist ein Bremssystem mit einem Steuergerät bekannt, wobei das Steuergerät ein Achssteuermodul mit einer Steuerfunktion zur Aussteuerung eines pneumatischen Drucks zur Bereitstellung einer Betriebsbremsfunktion aufweist. Das Steuergerät weist zusätzlich eine Fahrdynamiksensoreinheit mit mindestens einem Beschleunigungs- und/oder Drehratensensor auf, welche für eine Fahrdynamikregelung des Fahrzeugs dient.

Die DE102008014459A1 betrifft eine elektrisch gesteuerte Bremsanlage für einen aus einem Zugfahrzeug und wenigstens einem Anhängefahrzeug bestehenden Fahrzeugzug, wobei eine Steuereinrichtung in ein Achsmodul integriert ist, mittels dessen, insbesondere durch Aussteuerung eines pneumatischen Drucks zum Betätigen von Bremszylindern, eine erste Bremse und/oder eine zweite Bremse betätigbar ist.

Die DE102007021646A1 betrifft einen Modulator, insbesondere für ein Bremssystem in einem Kraftfahrzeug, welcher über einen Datenbus mit einem Zentralmodul in Verbindung steht, wobei der Modulator mindestens einen Eingang zur Erfassung von Messwerten und mindestens einen Ausgang zur Ansteuerung mindestens eines elektromagnetischen Ventils aufweist, wobei durch den Datenbus ein Regelkreis zur Betätigung des mindestens einen elektromagnetischen Ventils derart geschlossen ist, dass die durch den Modulator erfassten Messwerte an das Zentralmodul übertragen werden, wobei aus diesen Messwerten erst in dem Zentralmodul Steuerbefehle zur Betätigung des mindestens einen elektromagnetischen Ventils berechnet werden und wobei diese Steuerbefehle über den Datenbus an den Modulator übertragen werden, damit der Modulator das mindestens eine elektromagnetische Ventil in Abhängigkeit der über den Datenbus übertragenen Steuerbefehle ansteuert.

Auch wenn die bisherigen Systeme im Allgemeinen gut funktionieren, und auch eingesetzt werden, besteht dennoch weiterhin Bedarf an kostengünstigen Systemen, die möglichst kostengünstige Komponenten verwenden, leicht zu montieren und skalierbar sind, das heißt auf einfache Art und Weise möglichst ohne hohen Zusatzaufwand auf verschiedene Fahrzeugkonfigurationen (beispielsweise mit oder ohne Zusatzachse, mehrere Hinterachsen, oder Anhängervarianten) ausdehnbar sind.

Die vorliegende Erfindung löst diese Aufgabe in einem ersten Aspekt bei einem elektronisch gesteuerten pneumatischen Bremssystem der eingangs genannten Art dadurch, dass die zentrale elektronische Steuereinheit mit dem Hinterachsmodulator und/oder dem Vorderachsmodulator als eine Baueinheit ausgebildet ist.

Die Erfindung macht sich die Erkenntnis zunutze, dass ein besonders einfaches und kostengünstiges Bremssystem dadurch aufgebaut werden kann, dass sowohl für die Vorderachse als auch für die Hinterachse Einkanal-Achsmodulatoren verwendet werden, die nur einen Druck aussteuern können, aber um eine radindividuelle Bremsung zu erreichen, diesen Einkanal-Achsmodulatoren ABS-Ventile nachgeschaltet werden. ABS-Ventile sind gut verfügbare Bauteile, die weitreichend eingesetzt werden. Im Rahmen der vorliegenden Erfindung werden auch an der Hinterachse ABS-Ventile eingesetzt. Um eine weitergehende Integration und eine kostengünstige Montage zu erreichen ist zudem gemäß der Erfindung vorgesehen, dass die zentrale elektronische Steuereinheit mit dem Hinterachsmodulator und/oder dem Vorderachsmodulator aus einer Baueinheit ausgebildet ist. Insbesondere die Integration mit dem Hinterachsmodulator ist vorteilhaft, da auf diese Weise Bauraum gespart und Montagekosten reduziert werden können. Da auch der Hinterachsmodulator als Einkanal-Achsmodulator ausgebildet ist, ist diese Integration besonders einfach. In anderen herkömmlichen Bremssystemen ist der Hinterachsmodulator oft als Zweikanal-Achsmodulator ausgebildet und weist daher eine umfangreichere eigene Intelligenz auf, als dies bei Einkanal-Achsmodulatoren der Fall ist. Auf diese Weise lassen sich mit der vorliegenden Erfindung verschiedene Vorteile gleichzeitig realisieren: Sowohl die Verwendung von einfachen Bauteilen wie ABS-Ventilen als auch die Integration von einfachen und bekannten Bauteilen in Module, um hierdurch Bauraum und Verkabelungsaufwand einzusparen. Weiterhin lässt sich ein solcher Ansatz verhältnismäßig leicht skalieren und auf weitere Achsen ausweiten. Sind beispielsweise zwei Hinterachsen für das Nutzfahrzeug vorgesehen, kann auch der für die weitere Hinterachse vorgesehene weitere Achsmodulator in die Baueinheit mit integriert werden. Der Montageaufwand wird also nicht erhöht.

Gemäß einer ersten bevorzugten Ausführungsform ist die zentrale elektronische Steuereinheit mit dem Hinterachsmodulator und/oder dem Vorderachsmodulator als ein Modul ausgebildet. Hierdurch wird eine weitere Integration der zwei bzw. mehr Bauteile erreicht. Im vorliegenden Rahmen wird unter der Integration in ein Modul verstanden, dass die zentrale elektronische Steuereinheit und der Hinterachsmodulator bzw. Vorderachsmodulator eine gemeinsame elektronische Steuerung, das heißt eine gemeinsame elektronische Intelligenz, aufweisen. Sie sind nicht nur gemeinsam als Baueinheit ausgebildet, sondern auch funktional integriert. Hierdurch können in vorteilhafter Weise elektronische Bauteile reduziert werden.

Zur genauen Ausgestaltung der Vorderachs- und Hinterachsmodulatoren ist vorzugsweise vorgesehen, dass der Vorderachsmodulator ein oder mehrere elektrisch schaltbare pneumatische Ventile aufweist, zum Aussteuern eines Vorderachsbremsdrucks an den ersten und zweiten Vorderachs-ABS-Ventilen und der Hinterachsmodulator ein oder mehrere elektrisch schaltbare pneumatische Ventile aufweist zum Aussteuern eines Hinterachsbremsdrucks an den ersten und zweiten Hinterachs-ABS-Ventilen. In einer konkreten Ausgestaltung können sowohl der Vorderachsmodulator als auch der Hinterachsmodulator ein oder mehrere elektrisch schaltbare 2/2-Wege- oder 3/2-Wege-Ventile aufweisen, die eine Vorsteuereinheit bilden, und ein pneumatisch betätigbares Relais-Ventil, das eine Hauptventileinheit bildet. Mittels der Vorsteuereinheit kann dann ein Steuerdruck an dem entsprechenden Relais-Ventil bereitgestellt werden, das daraufhin einen Arbeitsdruck als Vorderachsbremsdruck bzw. Hinterachsbremsdruck aussteuert. Über die Betätigung der entsprechenden ABS-Ventile kann dann der ausgesteuerte Vorderachs- bzw. Hinterachsbremsdruck radgerecht gesenkt werden, um ein Blockieren des entsprechenden Rades zu vermeiden.

Weiterhin ist bevorzugt, dass der Vorderachsmodulator und/oder der Hinterachsmodulator einen Mikrocontroller aufweisen, der mit der zentralen Steuereinheit zum Empfangen von Vorderachssignalen bzw. Hinterachssignalen und zum Schalten der jeweiligen elektrisch schaltbaren pneumatischen Ventile verbunden ist. In dieser Ausführungsform weisen sowohl der Vorderachs- als auch der Hinterachsmodulator einen eigenen Mikrocontroller auf, der dazu vorgesehen ist, ein Vorderachssignal bzw. Hinterachssignal zu empfangen und umzusetzen, und in der Folge die in dem Vorderachs- bzw. Hinterachsmodulator vorgesehenen elektrisch schaltbaren pneumatischen Ventile zu schalten.

Alternativ kann vorgesehen sein, dass der Vorderachsmodulator und/oder der Hinterachsmodulator mit der zentralen Steuereinheit verbunden ist, um von dieser erste und/oder zweite Schaltsignale zum direkten Schalten der jeweiligen elektrisch schaltbaren pneumatischen Ventile zu empfangen. Auf diese Weise erhält der Hinterachsmodulator bzw. der Vorderachsmodulator direkt Schaltsignale und braucht in diesem Fall keine eigenen Mikrocontroller. Die Schaltsignale für die jeweiligen elektrisch schaltbaren pneumatischen Ventile werden direkt in der zentralen Steuereinheit erzeugt und von dieser bereitgestellt. Es kann auch vorgesehen sein, dass beispielsweise der Vorderachsmodulator über einen eigenen Mikrocontroller verfügt, der Hinterachsmodulator aber nicht, und im Gegenzug mit der zentralen elektronischen Steuereinheit in ein Modul integriert ist.

Gemäß einer weiteren bevorzugten Ausführungsform sind die ersten und zweiten Vorderachs-ABS-Ventile direkt an dem Vorderachsmodulator angeordnet und bilden mit diesem eine Baueinheit. Auf diese Weise kann die Integration der einzelnen Komponenten noch weiter vorangetrieben werden. Der Montageaufwand wird reduziert und auch Verkabelung kann reduziert werden. Die ersten und zweiten Vorderachs-ABS-Ventile können dazu entweder an ein Gehäuse des Vorderachsmodulators geflanscht, oder in das Gehäuse des Vorderachsmodulators eingebaut sein.

Das Gleiche kann auch für die ersten und zweiten Hinterachs-ABS-Ventile gelten, die dann direkt an dem Hinterachsmodulator angeordnet sind und mit diesem eine Baueinheit bilden. Ist der Hinterachsmodulator mit der zentralen Steuereinheit integriert, sind die ersten und zweiten Hinterachs-ABS-Ventile vorzugsweise an dieser Baueinheit angeordnet.

In einer bevorzugten Weiterbildung sind die ersten und zweiten Vorderachs-ABS-Ventile elektrisch mit der zentralen Steuereinheit zum Bilden einer geschlossenen Regelschleife verbunden. In übereinstimmender Weise sind vorzugsweise auch die ersten und zweiten Hinterachs-ABS-Ventile elektrisch mit der zentralen Steuereinheit zum Bilden einer geschlossenen Regelschleife verbunden. Die zentrale Steuereinheit stellt vorzugsweise Signale zum Schalten an dem Vorderachsmodulator und dem Hinterachsmodulator bereit, entweder Signale zum direkten Schalten der Ventile oder Signale, die von Mikrocontrollern in dem Vorderachs- bzw. Hinterachsmodulator umgesetzt werden. Vorzugsweise umfasst das elektronisch gesteuerte pneumatische Bremssystem auch Raddrehzahlsensoren an der Vorder- und Hinterachse, die ebenfalls mit der zentralen Steuereinheit verbunden sind. Auf diese Weise kann die zentrale Steuereinheit durch Auswertung von den Raddrehzahlsensoren gelieferten Raddrehzahlsignalen in entsprechender Weise die ersten und zweiten Vorderachs- bzw. Hinterachs-ABS-Ventile ansteuern, um ein Blockieren von einzelnen Rädern zu vermeiden. Auf diese Weise wird die Steuerung des Bremssystems über die zentrale Steuereinheit realisiert, wohingegen der Vorderachs- und Hinterachsmodulator keine eigene Intelligenz mehr benötigen. Hier können also kostengünstige Bauteile eingesetzt werden.

Erfindungsgemäß weist das elektronisch gesteuerte pneumatische Bremssystem einen weiteren einkanaligen Hinterachsmodulator zum Ansteuern von dritten und vierten Hinterachs-Bremsaktuatoren auf, wobei zwischen dem weiteren Hinterachsmodulator und dem dritten Hinterachs-Bremsaktuator ein drittes Hinterachs-ABS-Ventil und zwischen dem weiteren Hinterachsmodulator und dem vierten Hinterachs-Betriebsbremsaktuator ein viertes Hinterachs-ABS-Ventil geschaltet ist. Diese Ausführungsform ist insbesondere bevorzugt, wenn das Nutzfahrzeug zwei Hinterachsen aufweist, nämlich die Hinterachse und eine weitere Hinterachse.

Bei einer solchen Ausführungsform ist es bevorzugt, dass der weitere einkanalige Hinterachsmodulator mit dem Hinterachsmodulator und der zentralen Steuereinheit als die Baueinheit ausgebildet ist. Vorzugsweise sind der Hinterachsmodulator, der weitere Hinterachsmodulator und die zentrale Steuereinheit gemeinsam als Modul integriert.

Vorzugsweise ist bei einer solchen Ausführungsform auch vorgesehen, dass auch die dritten und vierten Hinterachs-ABS-Ventile direkt an dem weiteren Hinterachsmodulator angeordnet sind und mit diesem eine Baueinheit bilden. Auch diese können an den Hinterachsmodulator angeflanscht oder mit diesem in ein Gehäuse integriert sein.

Ferner ist bevorzugt, dass die dritten und vierten Hinterachs-ABS-Ventile elektrisch mit der zentralen Steuereinheit, zum Bilden einer geschlossenen Regelschleife verbunden sind. Auch an der weiteren Hinterachse sind vorzugsweise Raddrehzahlsensoren vorgesehen, die wiederum mit der zentralen Steuereinheit verbunden sind.

Für weitere Vorteile und bevorzugte Ausführungsformen wird auf die gesamte Beschreibung verwiesen.

In einem zweiten Aspekt löst die Erfindung die eingangs genannte Aufgabe bei einem Fahrzeug mit einer Vorderachse, wenigstens einer Hinterachse und durch ein elektronisch gesteuertes pneumatisches Bremssystem nach einer der vorstehend beschriebenen bevorzugten Ausführungsformen eines elektronisch gesteuerten pneumatischen Bremssystems gemäß dem ersten Aspekt der Erfindung.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
Fig. 1 ein schematisches Layout eines elektronisch gesteuerten pneumatischen Bremssystems gemäß einem ersten Ausführungsbeispiel;
Fig. 2 ein schematisches Layout eines elektronisch gesteuerten pneumatischen Bremssystems gemäß einem zweiten Ausführungsbeispiel;
Fig. 3 eine schematische Darstellung von Vorderachsmodulator, Zentralmodul und Hinterachsmodulator; und
Fig.4 eine weitere schematische Darstellung von Vorderachsmodulator, Zentralmodul und Hinterachsmodulator.

Ein Fahrzeug 100, nämlich insbesondere ein Nutzfahrzeug 102, weist eine Vorderachse VA und eine Hinterachse HA auf. Um die Vorderachse VA und Hinterachse HA einzubremsen, weist das Fahrzeug 100 ein elektronisch gesteuertes pneumatisches Bremssystem 1 auf.

Das elektronisch gesteuerte pneumatische Bremssystem 1 weist einen Vorderachsbremskreis 2 für die Vorderachse VA und einen Hinterachsbremskreis 4 für die Hinterachse HA auf. Darüber hinaus weist das elektronisch gesteuerte pneumatische Bremssystem 1 auch einen Anhängerbremskreis 6 auf, der weiter unten genau beschrieben werden wird. Der Hinterachsbremskreis 4 wird von einem ersten Druckluftvorrat 3 gespeist, der Vorratsdruck pV bereitstellt. Der Vorderachsbremskreis 2 wird von einem zweiten Druckluftvorrat 5 gespeist, der ebenfalls Vorratsdruck pV bereitstellt. In entsprechender Weise wird der Anhängerbremskreis 6 von einem dritten Druckluftvorrat 7 versorgt, der ebenfalls Vorratsdruck pV bereitstellt. Die ersten, zweiten und dritten Druckluftvorräte 3, 5, 7 werden über eine Luftaufbereitungsanlage versorgt, die hier nicht gezeigt ist.

Zum Steuern des elektronisch gesteuerten pneumatischen Bremssystems 1 ist eine zentralen elektronische Steuereinheit 8 vorgesehen, die auch als Zentralmodul oder ECU bezeichnet werden kann. Sie steuert insbesondere einen Vorderachsmodulator 10, der für die Vorderachse VA vorgesehen ist, und einen Hinterachsmodulator 12, der für die Hinterachse HA vorgesehen ist. Der Vorderachsmodulator 10 steuert erste und zweite Vorderachs-Betriebsbremsaktuatoren 14a, 14b an und der Hinterachsmodulator 12 steuert erste und zweite Hinterachs-Betriebsbremsaktuatoren 18a, 18b an.

Sowohl der Vorderachsmodulator 10 als auch der Hinterachsmodulator 12 sind einkanalig ausgebildet und stellen sowohl für die linke als auch für die rechte Fahrzeugseite jeweils nur einen Druck bereit. Der Vorderachsmodulator 10 stellt einen Vorderachsbremsdruck pVA bereit und der Hinterachsmodulator 12 stellt einen Hinterachsbremsdruck pHA bereit. Um nun aber eine schlupfgeregelte radindividuelle Bremsung erzielen zu können, ist zwischen den Vorderachsmodulator 10 und den ersten Vorderachs-Betriebsbremsaktuator 14a ein erstes Vorderachs-ABS-Ventil 16a geschaltet und zwischen den Vorderachsmodulator 10 und den zweiten Vorderachs-Betriebsbremsaktuator 14b ein zweites Vorderachs-ABS-Ventil 16b geschaltet. In entsprechender Weise ist zwischen den Hinterachsmodulator 12 und den ersten Hinterachs-Betriebsbremsaktuator 18a ein erstes Hinterachs-ABS-Ventil 20a geschaltet, und zwischen den Hinterachsmodulator 12 und den zweiten Hinterachs-Betriebsbremsaktuator 18b ist ein zweites Hinterachs-ABS-Ventil geschaltet. Auf diese Weise können sowohl die Vorderachse VA als auch die Hinterachse HA schlupfgeregelt eingebremst werden.

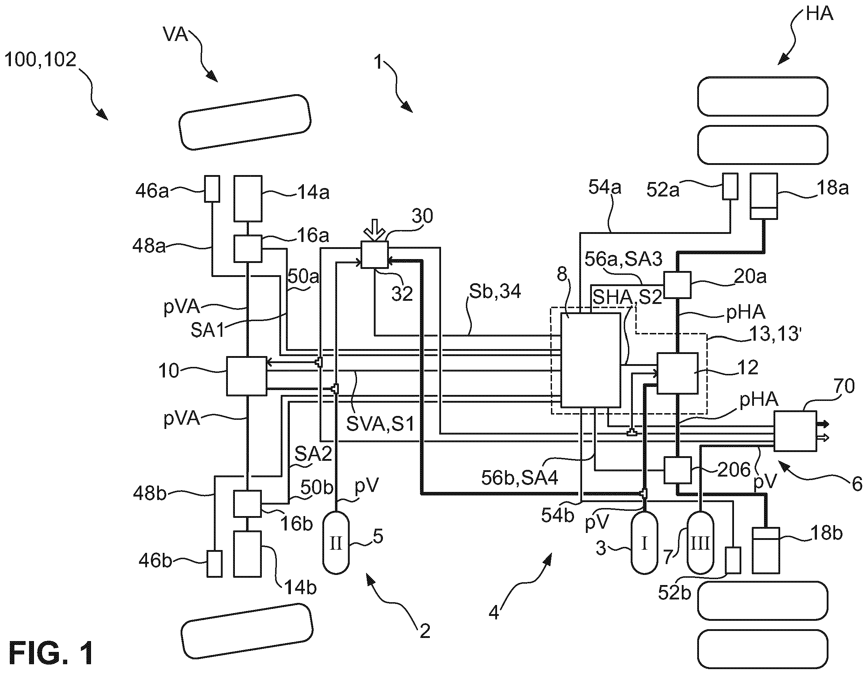

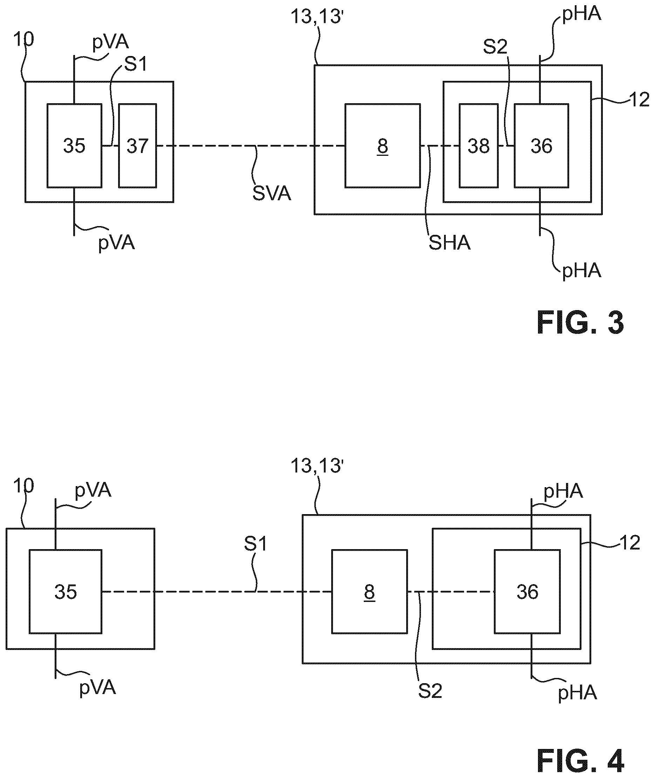

Zur Bereitstellung eines Bremswunsches weist das elektronisch gesteuerte pneumatische Bremssystem 1 gemäß der vorliegenden Ausführungsform (Fig. 1) einen Bremswertgeber 30 auf. Der Bremswertgeber 30 weist gemäß diesem Ausführungsbeispiel einen elektrischen Anschluss 32 auf, über den bei Betätigung des Bremswertgebers 30 durch einen Fahrzeugführer ein elektronisches Bremsanforderungssignal SB bereitgestellt wird. Das elektronische Bremsanforderungssignal SB wird über eine Bremssignalleitung 34 an der zentralen elektronischen Steuereinheit 8 bereitgestellt. Die zentrale elektronische Steuereinheit 8 verarbeitet das elektronische Bremsanforderungssignal SB und stellt an dem Vorderachsmodulator 10 entweder ein Vorderachssignal SVA oder ein erstes Schaltsignal S1 bereit, und an dem Hinterachsmodulator 12 entweder ein Hinterachssignal SHA oder ein zweites Schaltsignal S2, je nach Gestaltung des Vorderachsmodulators 10 und des Hinterachsmodulators 12 (vgl. auch Figuren 3 und 4).

Im Rahmen des vorliegenden Ausführungsbeispiels (Fig. 1) können Vorderachsmodulator 10 und Hinterachsmodulator 12 auf verschiedene Art und Weise ausgebildet sein. Üblicherweise weisen der Vorderachsmodulator 10 eine elektropneumatische Vorderachs-Ventileinheit 35 und der Hinterachsmodulator 12 eine elektropneumatische Hinterachs-Ventileinheit 36 auf. Diese Ventileinheiten umfassen jeweils ein oder mehrere elektrisch schaltbare pneumatische Ventile zum jeweiligen Aussteuern des Vorderachsbremsdrucks pVA an den ersten und zweiten Vorderachs-ABS-Ventilen 16a, 16b und eines Hinterachsbremsdrucks pHA an den ersten und zweiten Hinterachs-ABS-Ventilen 20a, 20b. Der genaue Aufbau solcher Ventileinheiten soll hier nicht weiter vertieft werden und ist dem Fachmann bekannt. Sie können insbesondere ein oder mehrere 2/2-Wege- oder 3/2-Wege-Ventile umfassen, die als Vorsteuereinheit zusammengeschaltet sind und/oder Relais-Ventile, die einen Vorsteuerdruck aufnehmen und den entsprechenden Vorderachs- bzw. Hinterachsbremsdruck pHA, pVA aussteuern.

In einer ersten Variante der Gestaltung des Vorderachsmodulators 10 (vgl. Fig. 3) umfasst der Vorderachsmodulator 10 neben der elektropneumatischen Vorderachs-Ventileinheit 35 auch einen Vorderachs-Mikrocontroller 37, der eine Intelligenz aufweist. In entsprechender Weise kann auch der Hinterachsmodulator 12 einen Hinterachs-Mikrocontroller 38 aufweisen. In diesem Fall reicht es, wenn die zentrale elektronische Steuereinheit 8 ein Vorderachssignal SVA an den Vorderachs-Mikrocontroller 37 bereitstellt. Das Vorderachssignal SVA ist in diesem Fall ein Signal, das von dem elektronischen Bremsanforderungssignal SB abgeleitet ist, jedoch in der Regel noch keine konkrete Schaltung von Ventilen angibt. Der Vorderachs-Mikrocontroller 37 setzt dann das Vorderachssignal SVA um und steuert selbsttätig ein erstes Schaltsignal S1 an der elektropneumatischen Vorderachs-Ventileinheit 35 aus, die infolgedessen schaltet, und aus dem an dem Vorderachsmodulator 10 bereitgestellten Vorratsdruck pV den Vorderachsbremsdruck pVA erzeugt.

In entsprechender Weise reicht es aus, wenn die zentrale elektronische Steuereinheit 8 ein Hinterachssignal SHA an dem Hinterachs-Mikrocontroller 38 bereitstellt, wenn der Hinterachsmodulator 12 einen derartigen Hinterachs-Mikrocontroller 38 aufweist. Auch dieser setzt dann das Hinterachssignal SHA um und stellt an der elektropneumatischen Hinterachs-Ventileinheit 36 ein zweites Schaltsignal S2 bereit, welches das Schalten von einem oder mehreren elektropneumatischen Ventilen der Hinterachs-Ventileinheit 36 bewirkt, um aus dem von dem ersten Druckluftvorrat 3 an dem Hinterachsmodulator 12 bereitgestellten Vorratsdruck pV den Hinterachsbremsdruck pHA zu erzeugen.

In Varianten der hier gezeigten Ausführungsbeispiele kann aber der Vorderachs-Mikrocontroller 37 und/oder der Hinterachs-Mikrocontroller 38 entfallen (vgl. Figur 4). In diesem Fall stellt dann die zentrale elektronische Steuereinheit 8 direkt die ersten und zweiten Schaltsignale S1, S2 an der elektropneumatischen Vorderachs-Ventileinheit 35, bzw. elektropneumatischen Hinterachs-Ventileinheit 36 bereit, um diese zu schalten. Hierdurch können Mikrocontroller eingespart werden, wodurch das Bremssystem 1 insgesamt kostengünstiger hergestellt werden kann.

Um eine weitere Vereinfachung des elektronisch gesteuerten elektropneumatischen Bremssystems 1 zu erzielen, sind im ersten Ausführungsbeispiel (Fig. 1) die zentrale elektronische Steuereinheit 8 und der Hinterachsmodulator 12 in eine Baueinheit 13, genauer gesagt ein Modul 13', integriert, das heißt, die zentrale elektronische Steuereinheit 8 und der Hinterachsmodulator 12 sind nicht nur miteinander als eine Baueinheit verbunden, sondern in ein gemeinsames Gehäuse integriert, sodass, auch wenn der Hinterachsmodulator 12 einen Hinterachs-Mikrocontroller 38 umfassen soll, dieser mit der zentralen elektronischen Steuereinheit 8 integriert sein kann, sodass nur eine elektronische Baueinheit für das Modul 13' vorgesehen ist.

In Alternativen, hier nicht gezeigten Ausführungsbeispielen, kann die zentrale elektronische Steuereinheit 8 auch mit dem Vorderachsmodulator 10 integriert sein.

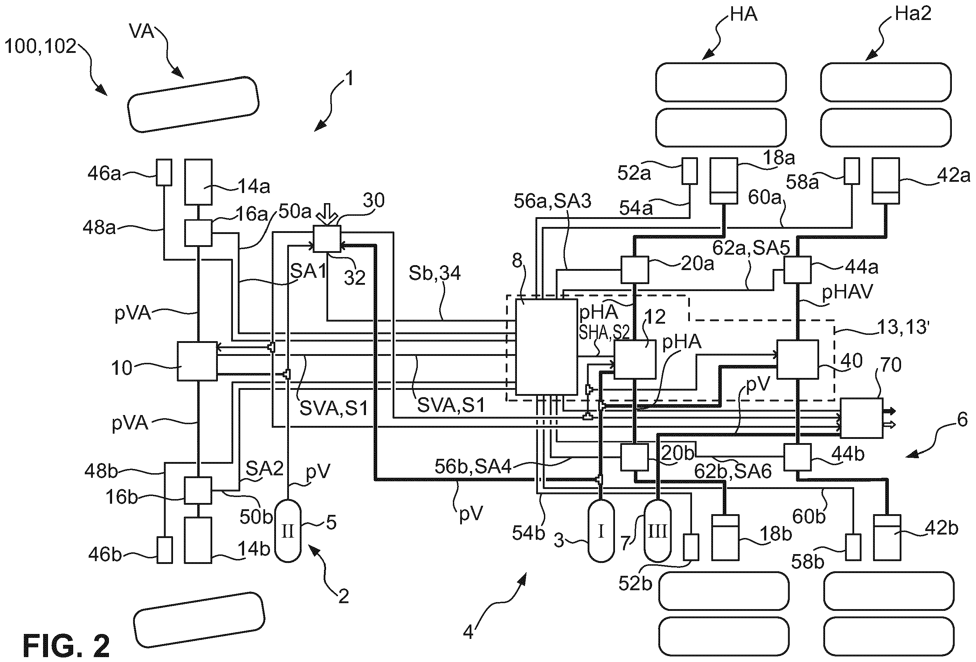

Das hier offenbarte elektronisch gesteuerte pneumatische Bremssystem 1 lässt sich besonders leicht auf andere Fahrzeugvarianten ausweiten. Insofern zeigt Fig. 2 ein Ausführungsbeispiel eines Nutzfahrzeugs 102, das neben der Hinterachse HA auch eine weitere Hinterachse HA2 umfasst. Die weitere Hinterachse HA2 ist Teil des Hinterachsbremskreises 4 und wird über einen weiteren Hinterachsmodulator 40 gesteuert, der im Wesentlichen entsprechend dem Hinterachsmodulator 12 ausgebildet sein kann. Über den weiteren Hinterachsmodulator 40 wird ein weiterer Hinterachsbremsdruck pHAV ausgesteuert, der identisch zu dem Hinterachsbremsdruck pHA sein kann. Dieser weitere Hinterachsbremsdruck pHAV wird am dritten und vierten Hinterachs-Betriebsbremsaktuator 42a, 42b bereitgestellt. Um hier wiederum eine Schlupfregelung zu erzielen, sind, wie auch bei den anderen Achsen VA, HA, ABS-Ventile vorgesehen, nämlich ein drittes Hinterachs-ABS-Ventil 44a und ein viertes Hinterachs-ABS-Ventil 44b, die jeweils zwischen den weiteren Hinterachsmodulator 40 und die dritten und vierten Hinterachs-Betriebsbremsaktuatoren 42a, 42b geschaltet sind. Auch der weitere Hinterachsmodulator 40 ist in diesem Ausführungsbeispiel (Fig. 2) in die Baueinheit 13 bzw. das Modul 13' integriert. Auf diese Weise wird der Montageaufwand deutlich reduziert und es kann ein weiterer Mikrocontroller, nämlich der für den weiteren Hinterachsmodulator 40, eingespart werden.

Sowohl in dem ersten Ausführungsbeispiel (Fig. 1) als auch im zweiten Ausführungsbeispiel (Fig. 2) sind sämtliche Achsen VA, HA, HA2 mit Raddrehzahlsensoren ausgestattet. Insofern sind für die Vorderachse VA erste und zweite Raddrehzahlsensoren 46a, 46b vorgesehen. Die ersten und zweiten Raddrehzahlsensoren 46a, 46b sind über erste und zweite Sensorleitungen 48a, 48b mit der zentralen elektronischen Steuereinheit 8, bzw. der Baueinheit 13, bzw. dem Modul 13' verbunden. Die ersten und zweiten Raddrehzahlsensoren 46a, 46b stellen über die ersten und zweiten Sensorleitung 48a, 48b Raddrehzahlsignale der Vorderachse VA an der zentralen elektronischen Steuereinheit 8 bereit. Die zentrale elektronische Steuereinheit 8 ist wiederum über erste und zweite ABS-Leitungen 50a, 50b mit den ersten und zweiten Vorderachs-ABS-Ventilen 16a, 16b verbunden, um diese anzusteuern. Wird durch die zentrale elektronische Steuereinheit 8 ermittelt, dass eines der Räder der Vorderachse VA blockiert, sendet die zentrale elektronische Steuereinheit 8 über die ersten und zweiten ABS-Leitungen 50a, 50b erste und zweite ABS-Signale SA1, SA2, um die ersten und zweiten Vorderachs-ABS-Ventile 16a, 16b entsprechend zu steuern, um so den jeweils an den ersten bzw. zweiten Vorderachs-Betriebsbremsaktuatoren 14a, 14b bereitgestellten Vorderachsbremsdruck pVA zu entlüften und so eine Bremskraft zu reduzieren.

In entsprechender Weise sind an der Hinterachse HA dritte und vierte Raddrehzahlsensoren 52a, 52b vorgesehen, die über entsprechende dritte und vierte Sensorleitungen 54a, 54b mit der zentralen elektronischen Steuereinheit 8 verbunden sind. Die zentrale elektronische Steuereinheit 8 ist über dritte und vierte ABS-Leitungen 56a, 56b mit den ersten und zweiten Hinterachs-ABS-Ventilen 20a, 20b verbunden und stellt an diesen in entsprechender Weise dritte und vierte ABS-Signale SA3, SA4 bereit. Auf diese Weise kann auch die Hinterachse HA schlupfgeregelt werden.

In dem zweiten Ausführungsbeispiel (Fig. 2) ist diese Systematik auch für die weitere Hinterachse HA2 umgesetzt. Insofern sind für die weitere Hinterachse HA2 fünfte und sechste Raddrehzahlsensoren 58a, 58b vorgesehen, die über fünfte und sechste Sensorleitungen 60a, 60b mit der zentralen elektronischen Steuereinheit 8 verbunden sind. Die zentrale elektronische Steuereinheit 8 ist wiederum über fünfte und sechstes ABS-Leitungen 62a, 62b mit den dritten und vierten Hinterachs-ABS-Ventilen 44a, 44b verbunden und stellt an diesen fünfte und sechste ABS-Signale SA5, SA6 bereit.

Auf diese Weise kann das komplette elektronisch gesteuerte pneumatische Bremssystem 1 schlupfgeregelt ausgelegt werden. Hierbei werden einfache Bauteile wie etwa ABS-Ventile verwendet. Außerdem reicht insgesamt eine elektronische Steuereinheit aus, um das Bremssystem zu steuern. Weitere Mikrocontroller oder dergleichen sind nicht erforderlich. Dieses System lässt sich besonders einfach montieren, integrieren und auch skalieren.

Wie sich weiterhin aus den Figuren 1 und 2 ergibt, ist für das elektronisch gesteuerte pneumatische Bremssystem 1 auch ein Anhängerbremskreis 6 vorgesehen, der hier optional ist. In dem Anhängerbremskreis 6 ist hier nur rein exemplarisch ein Anhängersteuerventil 70 gezeigt, das auf herkömmliche Art und Weise ausgebildet sein kann. Das Anhängersteuerventil 70 wird aus dem dritten Druckluftvorrat 7 gespeist und empfängt zu seiner Steuerung notwendige Signale ebenfalls von der zentralen elektronischen Steuereinheit 8. Je nach Ausgestaltung der zentralen elektronischen Steuereinheit 8 kann also auch ein Mikrocontroller in dem Anhängersteuerventil 70 entfallen.

**Bezugszeichenliste (Teil der Beschreibung)**

| | |
|---|---|
| 1 | Elektronisch gesteuertes pneumatisches Bremssystem |
| 2 | Vorderachsbremskreis |
| 3 | Erster Druckluftvorrat |
| 4 | Hinterachsbremskreis |
| 5 | Zweiter Druckluftvorrat |
| 6 | Anhängerbremskreis |
| 7 | Dritter Druckluftvorrat |
| 8 | Zentrale elektronische Steuereinheit |
| 10 | Vorderachsmodulator |
| 12 | Hinterachsmodulator |
| 13 | Baueinheit |
| 13' | Modul |
| 14a | Erster Vorderachs-Betriebsbremsaktuator |
| 14b | Zweiter Vorderachs-Betriebsbremsaktuator |
| 16a | Erstes Vorderachs-ABS-Ventil |
| 16b | Zweites Vorderachs-ABS-Ventil |
| 18a | Erster Hinterachs-Betriebsbremsaktuator |
| 18b | Zweiter Hinterachs-Betriebsbremsaktuator |
| 20a | Erstes Hinterachs-ABS-Ventil |
| 20b | Zweites Hinterachs-ABS-Ventil |
| 30 | Bremswertgeber |
| 32 | Elektrischer Anschluss |
| 34 | Bremssignalleitung |
| 35 | Elektropneumatische Vorderachsventileinheit |
| 36 | Elektropneumatische Hinterachsventileinheit |
| 37 | Vorderachs-Mikrocontroller |
| 38 | Hinterachs-Mikrocontroller |
| 40 | Weiterer Hinterachsmodulator |
| 42a | Dritter Hinterachs-Betriebsbremsaktuator |
| 42b | Vierter Hinterachs-Betriebsbremsaktuator |
| 44a | Drittes Hinterachs-ABS-Ventil |
| 44b | Viertes Hinterachs-ABS-Ventil |
| 46a | Erster Raddrehzahlsensor |
| 46b | Zweiter Raddrehzahlsensor |
| 48a | Erste Sensorleitung |
| 48b | Zweite Sensorleitung |
| 50a | Erste ABS-Leitung |
| 50b | Zweite ABS-Leitung |
| 52a | Dritter Raddrehzahlsensor |
| 52b | Vierter Raddrehzahlsensor |
| 54a | Dritte Sensorleitung |
| 54b | Vierte Sensorleitung |
| 56a | Dritte ABS-Leitung |
| 56b | Vierte ABS-Leitung |
| 58a | Fünfter Raddrehzahlsensor |
| 58b | Sechster Raddrehzahlsensor |
| 60a | Fünfte Sensorleitung |
| 60b | Sechste Sensorleitung |
| 62a | Fünfte ABS-Leitung |
| 62b | Sechste ABS-Leitung |
| 70 | Anhängersteuerventil |
| 100 | Fahrzeug |
| 102 | Nutzfahrzeug |
| pHA | Hinterachsbremsdruck |
| pHAV | Weiterer Hinterachsbremsdruck |
| pV | Vorratsdruck |
| pVA | Vorderachsbremsdruck |
| VA | Vorderachse |
| HA | Hinterachse |
| HA2 | Weitere Hinterachse |
| Sb | Elektronisches Bremsanforderungssignal |
| S1 | Erstes Schaltsignal |
| S2 | Zweites Schaltsignal |
| SVA | Vorderachssignal |
| SHA | Hinterachssignal |
| SA1 | Erstes ABS-Signal |
| SA2 | Zweites ABS-Signal |
| SA3 | Drittes ABS-Signal |
| SA4 | Viertes ABS-Signal |
| SA5 | Fünftes ABS-Signal |
| SA6 | Sechstes ABS-Signal |

## Patentansprüche

1. Elektronisch gesteuertes pneumatisches Bremssystem (1) für ein Fahrzeug (100), insbesondere Nutzfahrzeug (102), aufweisend:
einen Vorderachsbremskreis (2) mit einem einkanaligen Vorderachsmodulator (10) zum Ansteuern von ersten und zweiten Vorderachs-Betriebsbremsaktuatoren (14a, 14b), wobei zwischen den Vorderachsmodulator (10) und den ersten Vorderachs-Betriebsbremsaktuator (14a) ein erstes Vorderachs-ABS-Ventil (16a) und zwischen den Vorderachsmodulator (10) und den zweiten Vorderachs-Betriebsbremsaktuator (14b) ein zweites Vorderachs-ABS-Ventil (16b) geschaltet ist;
einen Hinterachsbremskreis (4) mit wenigstens einem einkanaligen Hinterachsmodulator (12) zum Ansteuern von ersten und zweiten Hinterachs-Betriebsbremsaktuatoren (18a, 18b), wobei zwischen den wenigstens einen Hinterachsmodulator (12) und den ersten Hinterachs-Betriebsbremsaktuator (18a) ein erstes Hinterachs-ABS-Ventil (20a) und zwischen den Hinterachsmodulator (12) und den zweiten Hinterachs-Betriebsbremsaktuator (18b) ein zweites Hinterachs-ABS-Ventil (20b) geschaltet ist;
einen Bremswertgeber (30), der wenigsten einen elektrischen Anschluss (32) aufweist, zum Bereitstellen eines elektronischen Bremsanforderungssignals (Sb); und
eine zentrale elektronische Steuereinheit (8), die wenigstens mit dem Bremswertgeber (30) zum Empfang des elektronischen Bremsanforderungssignals (Sb) verbunden ist, und zur Steuerung der Vorderachs- und Hinterachsmodulatoren (10, 12) mit diesen verbunden ist;
wobei die zentrale elektronische Steuereinheit (8) mit dem Hinterachsmodulator (12) und/oder dem Vorderachsmodulator (10) als eine Baueinheit (13) ausgebildet ist, **gekennzeichnet durch** einen weiteren einkanaligen Hinterachsmodulator (40) zum Ansteuern von dritten und vierten Hinterachs-Betriebsbremsaktuatoren (42a, 42b), wobei zwischen den weiteren Hinterachsmodulator (40) und den dritten Hinterachs-Betriebsbremsaktuator (42a) ein drittes Hinterachs-ABS-Ventil (44a) und zwischen den weiteren Hinterachsmodulator (40) und den vierten Hinterachs-Betriebsbremsaktuator (42b) ein viertes Hinterachs-ABS-Ventil (44b) geschaltet ist.

2. Elektronisch gesteuertes pneumatisches Bremssystem (1) nach Anspruch 1, wobei die zentrale elektronische Steuereinheit (8) mit dem Hinterachsmodulator (12) und/oder Vorderachsmodulator (10) in ein Modul (13') integriert sind und eine gemeinsame elektronische Steuerung aufweisen.

3. Elektronisch gesteuertes pneumatisches Bremssystem (1) nach einem der vorstehenden Ansprüche, wobei der Vorderachsmodulator (10) ein oder mehrere elektrisch schaltbare pneumatische Ventile aufweist, zum Aussteuern eines Vorderachsbremsdrucks (pVA) an den ersten und zweiten Vorderachs-ABS-Ventilen (16a, 16b), und der Hinterachsmodulator (12) ein oder mehrere elektrisch schaltbare pneumatische Ventile aufweist, zum Aussteuern eines Hinterachsbremsdrucks (pHA) an den ersten und zweiten Hinterachs-ABS-Ventilen (20a, 20b).

4. Elektronisch gesteuertes pneumatisches Bremssystem (1) nach Anspruch 3, wobei der Vorderachsmodulator (10) einen Vorderachs-Mikrocontroller (37) und/oder der Hinterachsmodulator (12) einen Hinterachs-Mikrocontroller (38) aufweist, der mit der zentralen Steuereinheit (8) verbunden ist, zum Empfangen von Vorderachssignalen (SVA) bzw. Hinterachssignalen (SHA), und zum Schalten der jeweiligen elektrisch schaltbaren pneumatischen Ventile.

5. Elektronisch gesteuertes pneumatisches Bremssystem (1) nach Anspruch 3, wobei der Vorderachsmodulator (10) und/oder der Hinterachsmodulator (12) mit der zentralen Steuereinheit (8) verbunden sind, um von dieser erste und/oder zweite Schaltsignale (S1, S2) zu empfangen, zum direkten Schalten der jeweiligen elektrisch schaltbaren pneumatischen Ventile.

6. Elektronisch gesteuertes pneumatisches Bremssystem (1) nach einem der vorstehenden Ansprüche, wobei die ersten und zweiten Vorderachs-ABS-Ventile (16a, 16b) direkt an dem Vorderachsmodulator (10) angeordnet sind und mit diesem eine Baueinheit bilden.

7. Elektronisch gesteuertes pneumatisches Bremssystem (1) nach einem der vorstehenden Ansprüche, wobei die ersten und zweiten Hinterachs-ABS-Ventile (20a, 20b) direkt an dem Hinterachsmodulator (12) angeordnet sind und mit diesem eine Baueinheit bilden.

8. Elektronisch gesteuertes pneumatisches Bremssystem (1) nach einem der vorstehenden Ansprüche, wobei die ersten und zweiten Vorderachs-ABS-Ventile (16a, 16b) elektrisch mit der zentralen Steuereinheit (8) verbunden sind, zum Bilden einer geschlossenen Regelschleife.

9. Elektronisch gesteuertes pneumatisches Bremssystem (1) nach einem der vorstehenden Ansprüche, wobei die ersten und zweiten Hinterachs-ABS-Ventile (20a, 20b) elektrisch mit der zentralen Steuereinheit (8) verbunden sind, zum Bilden einer geschlossenen Regelschleife.

10. Elektronisch gesteuertes pneumatisches Bremssystem (1) nach einem der Ansprüche 1 bis 9, wobei der weitere einkanalige Hinterachsmodulator (40) mit dem Hinterachsmodulator (12) und der zentralen Steuereinheit (8) als die Baueinheit (13) ausgebildet ist.

11. Elektronisch gesteuertes pneumatisches Bremssystem (1) nach einem der Ansprüche 1 bis 10, wobei auch die dritten und vierten Hinterachs-ABS-Ventile (44a, 44b) direkt an dem weiteren Hinterachsmodulator (44) angeordnet sind und mit diesem eine Baueinheit bilden.

12. Elektronisch gesteuertes pneumatisches Bremssystem (1) nach einem der vorstehenden Ansprüche 1 bis 11, wobei die dritten und vierten Hinterachs-ABS-Ventile (44a, 44b) elektrisch mit der zentralen Steuereinheit (8) verbunden sind, zum Bilden einer geschlossenen Regelschleife.

13. Fahrzeug (100), insbesondere Nutzfahrzeug (102), mit einer Vorderachse (VA), wenigstens einer Hinterachse (HA) und einem elektronisch gesteuerten pneumatischen Bremssystem (1) nach einem der vorstehenden Ansprüche.

## Claims

1. Electrically controlled pneumatic braking system (1) for a vehicle (100), in particular a utility vehicle (102), comprising:
a front axle brake circuit (2) with a single-channel front axle modulator (10) for controlling first and second front axle service brake actuators (14a, 14b), a first front axle ABS valve (16a) being connected between the front axle modulator (10) and the first front axle service brake actuator (14a) and a second front axle ABS valve (16b) being connected between the front axle modulator (10) and the second front axle service brake actuator (14b);
a rear axle brake circuit (4) with at least one single-channel rear axle modulator (12) for controlling first and second rear axle service brake actuators (18a, 18b), a first rear axle ABS valve (20a) being connected between the at least one rear axle modulator (12) and the first rear axle service brake actuator (18a) and a second rear axle ABS valve (20b) being connected between the rear axle modulator (12) and the second rear axle service brake actuator (18b);
a brake value transmitter (30) having at least one electrical connection (32) for providing an electronic brake request signal (Sb); and
a central electronic control unit (8) which is connected at least to the brake value transmitter (30) for receiving the electronic brake request signal (Sb) and is connected to the front axle and rear axle modulators (10, 12) for controlling them;
the central electronic control unit (8) together with the rear axle modulator (12) and/or the front axle modulator (10) being designed as a structural unit (13), **characterized by** a further single-channel rear axle modulator (40) for controlling third and fourth rear axle service brake actuators (42a, 42b), a third rear axle ABS valve (44a) being connected between the further rear axle modulator (40) and the third rear axle service brake actuator (42a) and a fourth rear axle ABS valve (44b) being connected between the further rear axle modulator (40) and the fourth rear axle service brake actuator (42b).

2. Electronically controlled pneumatic braking system (1) according to claim 1, wherein the central electronic control unit (8) together with the rear axle modulator (12) and/or front axle modulator (10) are integrated into a module (13') and have a common electronic control.

3. Electronically controlled pneumatic braking system (1) according to either of the preceding claims, wherein the front axle modulator (10) has one or more electrically switchable pneumatic valves for controlling a front axle brake pressure (pVA) at the first and second front axle ABS valves (16a, 16b), and the rear axle modulator (12) has one or more electrically switchable pneumatic valves for controlling a rear axle brake pressure (pHA) at the first and second rear axle ABS valves (20a, 20b).

4. Electronically controlled pneumatic braking system (1) according to claim 3, wherein the front axle modulator (10) has a front axle microcontroller (37) and/or the rear axle modulator (12) has a rear axle microcontroller (38) which is connected to the central control unit (8) for receiving front axle signals (SVA) or rear axle signals (SHA), respectively, and for switching the respective electrically switchable pneumatic valves.

5. Electronically controlled pneumatic braking system (1) according to claim 3, wherein the front axle modulator (10) and/or the rear axle modulator (12) are connected to the central control unit (8) in order to receive first and/or second switching signals (S1, S2) therefrom for directly switching the respective electrically switchable pneumatic valves.

6. Electronically controlled pneumatic braking system (1) according to any of the preceding claims, wherein the first and second front axle ABS valves (16a, 16b) are arranged directly on the front axle modulator (10) and form a structural unit therewith.

7. Electronically controlled pneumatic braking system (1) according to any of the preceding claims, wherein the first and second rear axle ABS valves (20a, 20b) are arranged directly on the rear axle modulator (12) and form a structural unit therewith.

8. Electronically controlled pneumatic braking system (1) according to any of the preceding claims, wherein the first and second front axle ABS valves (16a, 16b) are electrically connected to the central control unit (8) to form a closed control loop.

9. Electronically controlled pneumatic braking system (1) according to any of the preceding claims, wherein the first and second rear axle ABS valves (20a, 20b) are electrically connected to the central control unit (8) to form a closed control loop.

10. Electronically controlled pneumatic braking system (1) according to any of claims 1 to 9, wherein the further single-channel rear axle modulator (40) together with the rear axle modulator (12) and the central control unit (8) is formed as the structural unit (13).

11. Electronically controlled pneumatic braking system (1) according to any of claims 1 to 10, wherein the third and fourth rear axle ABS valves (44a, 44b) are also arranged directly on the further rear axle modulator (44) and form a structural unit therewith.

12. Electronically controlled pneumatic braking system (1) according to any of the preceding claims 1 to 11, wherein the third and fourth rear axle ABS valves (44a, 44b) are electrically connected to the central control unit (8) to form a closed control loop.

13. Vehicle (100), in particular a utility vehicle (102), comprising a front axle (VA), at least one rear axle (HA) and an electronically controlled pneumatic braking system (1) according to any of the preceding claims.

## Revendications

1. Système de freinage pneumatique à commande électronique (1) pour un véhicule (100), en particulier un véhicule utilitaire (102), présentant :
un circuit de freinage d'essieu avant (2) comportant un modulateur d'essieu avant (10) à un canal pour la commande d'un premier et d'un deuxième actionneur de frein de service d'essieu avant (14a, 14b), dans lequel une première soupape ABS d'essieu avant (16a) est montée entre le modulateur d'essieu avant (10) et le premier actionneur de frein de service d'essieu avant (14a) et une deuxième soupape ABS d'essieu avant (16b) est montée entre le modulateur d'essieu avant (10) et le deuxième actionneur de frein de service d'essieu avant (14b) ;
un circuit de freinage d'essieu arrière (4) comportant au moins un modulateur d'essieu arrière (12) à un canal pour la commande d'un premier et d'un deuxième actionneur de frein de service d'essieu arrière (18a, 18b), dans lequel une première soupape ABS d'essieu arrière (20a) est montée entre l'au moins un modulateur d'essieu arrière (12) et le premier actionneur de frein de service d'essieu arrière (18a) et une deuxième soupape ABS d'essieu arrière (20b) est montée entre le modulateur d'essieu arrière (12) et le deuxième actionneur de frein de service d'essieu arrière (18b) ;
un transducteur de valeur de freinage (30) présentant au moins une connexion électrique (32) permettant de fournir un signal électronique de demande de freinage (Sb) ; et
une unité de commande électronique centrale (8) qui est connectée au moins au transducteur de valeur de freinage (30) pour la réception du signal électronique de demande de freinage (Sb), et qui est connectée aux modulateurs d'essieu avant et d'essieu arrière (10, 12) pour les commander ;
dans lequel l'unité de commande électronique centrale (8) est réalisée sous forme d'unité structurale (13) avec le modulateur d'essieu arrière (12) et/ou le modulateur d'essieu avant (10), **caractérisée par** un autre modulateur d'essieu arrière (40) à un canal pour la commande d'un troisième et d'un quatrième actionneur de frein de service d'essieu arrière (42a, 42b), dans lequel une troisième soupape ABS d'essieu arrière (44a) est montée entre l'autre modulateur d'essieu arrière (40) et le troisième actionneur de frein de service d'essieu arrière (42a) et une quatrième soupape ABS d'essieu arrière (44b) est montée entre l'autre modulateur d'essieu arrière (40) et le quatrième actionneur de frein de service d'essieu arrière (42b).

2. Système de freinage pneumatique à commande électronique (1) selon la revendication 1, dans lequel l'unité de commande électronique centrale (8) et le modulateur d'essieu arrière (12) et/ou le modulateur d'essieu avant (10) sont intégrés dans un module (13') et présentent une commande électronique commune.

3. Système de freinage pneumatique à commande électronique (1) selon l'une des revendications précédentes, dans lequel le modulateur d'essieu avant (10) présente une ou plusieurs soupapes pneumatiques commutables électriquement pour la commande d'une pression de freinage d'essieu avant (pVA) au niveau de la première et de la deuxième soupape ABS d'essieu avant (16a, 16b), et le modulateur d'essieu arrière (12) présente une ou plusieurs soupapes pneumatiques commutables électriquement pour la commande d'une pression de freinage d'essieu arrière (pHA) au niveau de la première et de la deuxième soupape ABS d'essieu arrière (20a, 20b).

4. Système de freinage pneumatique à commande électronique (1) selon la revendication 3, dans lequel le modulateur d'essieu avant (10) présente un microdispositif de commande d'essieu avant (37) et/ou le modulateur d'essieu arrière (12) présente un microdispositif de commande d'essieu arrière (38), lesquels sont connectés à l'unité de commande centrale (8) pour la réception de signaux d'essieu avant (SVA) ou de signaux d'essieu arrière (SHA), et pour la commutation des soupapes pneumatiques commutables électriquement respectives.

5. Système de freinage pneumatique à commande électronique (1) selon la revendication 3, dans lequel le modulateur d'essieu avant (10) et/ou le modulateur d'essieu arrière (12) sont connectés à l'unité de commande centrale (8) afin de recevoir de celle-ci de premiers et/ou de seconds signaux de commutation (S1, S2) pour la commutation directe des soupapes pneumatiques commutables électriquement respectives.

6. Système de freinage pneumatique à commande électronique (1) selon l'une des revendications précédentes, dans lequel la première et la deuxième soupapes ABS d'essieu avant (16a, 16b) sont disposées directement sur le modulateur d'essieu avant (10) et forment avec celui-ci une unité structurale.

7. Système de freinage pneumatique à commande électronique (1) selon l'une des revendications précédentes, dans lequel la première et la deuxième soupapes ABS d'essieu arrière (20a, 20b) sont disposées directement sur le modulateur d'essieu arrière (12) et forment avec celui-ci une unité structurale.

8. Système de freinage pneumatique à commande électronique (1) selon l'une des revendications précédentes, dans lequel la première et la deuxième soupape ABS d'essieu avant (16a, 16b) sont connectées électriquement à l'unité de commande centrale (8) pour permettre la formation d'une boucle de régulation fermée.

9. Système de freinage pneumatique à commande électronique (1) selon l'une des revendications précédentes, dans lequel la première et la deuxième soupape ABS d'essieu arrière (20a, 20b) sont connectées électriquement à l'unité de commande centrale (8) pour permettre la formation d'une boucle de régulation fermée.

10. Système de freinage pneumatique à commande électronique (1) selon l'une des revendications 1 à 9, dans lequel l'autre modulateur d'essieu arrière (40) à un canal est réalisé sous forme d'unité structurale (13) avec le modulateur d'essieu arrière (12) et l'unité de commande centrale (8).

11. Système de freinage pneumatique à commande électronique (1) selon l'une des revendications 1 à 10, dans lequel la troisième et la quatrième soupape ABS d'essieu arrière (44a, 44b) sont également disposées directement sur l'autre modulateur d'essieu arrière (44) et forment avec celui-ci une unité structurale.

12. Système de freinage pneumatique à commande électronique (1) selon l'une des revendications précédentes 1 à 11, dans lequel la troisième et la quatrième soupape ABS d'essieu arrière (44a, 44b) sont connectées électriquement à l'unité de commande centrale (8) pour permettre la formation d'une boucle de régulation fermée.

13. Véhicule (100), en particulier véhicule utilitaire (102), comportant un essieu avant (VA), au moins un essieu arrière (HA) et un système de freinage pneumatique à commande électronique (1) selon l'une des revendications précédentes.
